# EUROPEAN PATENT SPECIFICATION

(11) **EP 1 782 573 B1**
(45) Date of publication and mention of the grant of the patent: **31.10.2012**
(21) Application number: 04766571.6
(22) Date of filing: 20.08.2004
(51) Int. Cl.: H04L 12/26, H04L 29/06, H04L 12/14, H04L 12/24

(54) **Quality of service monitor in a packet-based network**
Dienstgüteüberwachungs-Monitor in einem Paketnetzwerk
Moniteur de qualite de service dans un réseau à commutation par paquets

(43) Date of publication of application: 09.05.2007
(73) Proprietor: Telecom Italia S.p.A., 20123 Milano (IT)
(72) Inventor: DE NOIA, Giuseppe, c/o Telecom Italia S.p.A., I-10148 Torino (IT); FUSCO, Antonio, c/o Telecom Italia S.p.A., I-10148 Torino (IT); ROASIO, Andrea, I-10123 Torino (IT)
(74) Representative: Jorio, Paolo
(86) International application number: PCT/EP2004/051874
(87) International publication number: WO 2006/018046

(56) References cited:
- WO-A-02/15481
- US-A1- 2003 120 773
- US-A1- 2004 066 753
- US-A1- 2004 071 084
- SCHULZRINNE H ET AL: "RFC 1889: RTP: A Transport Protocol for Real-Time Applications" NETWORK WORKING GROUP REQUEST FOR COMMENTS, January 1996 (1996-01), pages 1-38, XP002229836
- ANWAR SIDDIQUI AVAYA INC DAN ROMASCANU AVAYA INC EUGENE GOLOVINSKY BMC SOFTWARE: "Real-time Application Quality of Service Monitoring (RAQMON) Framework <draft-ietf-rmonmib-raqmon-framework-03.tx t>" IETF STANDARD-WORKING-DRAFT, INTERNET ENGINEERING TASK FORCE, IETF, CH, vol. rmonmib, no. 3, 8 September 2003 (2003-09-08), XP015003212 ISSN: 0000-0004 cited in the application

## Description

### TECHNICAL FIELD OF THE INVENTION

The present invention relates generally to networks, and, more particularly, to monitoring quality of service (QoS) in a packet-based network.

### BACKGROUND ART

Intense competition is expected in the information-networking arena over the next decade. As the competition increases, it is essential for companies to position themselves appropriately taking advantage of their core competencies and preparing for the emerging telecommunications technology. In this competitive environment, mergers, alliances, and new entrants in the market place have service providers searching for innovative ways to retain and attract subscribers. Today's service providers are striving to differentiate themselves within this expanding competitive landscape by searching for ways to bundle new services for their customer base. Consequently, many service providers are looking to Next Generation Networks (NGN) as a means to attract new customers.

NGN is a term used to designate upcoming telecommunication networks based on IP technology that deliver integrated voice and data services. An NGN can be thought of as a packet-based network where the packet switching and transport elements, such as routers, switches, and gateways, are logically and physically separated from the service/call control intelligence. This control intelligence is used to support all types of services over packet-based transport network, including everything from basic voice telephony services to data, video, multimedia, and advanced broadband.

QoS is an important element in ensuring robust growth of NGN, and may include monitoring one or more of the following:
● Service availability, such as the reliability of the user's connection to Internet Service.
● Delay (also called latency), such as the time interval between transmitting and receiving packets.
● Delay variation or jitter, which refers to the variation in time duration between all packets in a stream taking the same route.
● Throughput, which is the average or peak rate at which packets are transmitted.
● Packet loss rate resulting from congestion that is the maximum rate at which packets can be discarded during transfer through a network.

To be competitive, companies will have to ensure that the network is maintaining proper QoS levels and/or SLA (Service Level Agreement) standards for mobile users to experience rich multimedia services. Examples of QoS enforcement techniques on the network elements include integrated services and differentiated services. Integrated services (also called Int-Serv) uses the Resource Reservation Protocol (RSVP) and is implemented at the edge of enterprise networks where user flows can be managed at the desktop user level. This protocol assumes that resources are reserved for every flow requiring QoS at every router hub in the path between receiver and transmitter, using end-to-end signalling and must maintain a per-flow soft state at every router in the network. Differentiated service (also called Diff-Serv) minimizes signalling and concentrates on aggregated flows and per-hub behavior (PHB) applied to a network-wide set of traffic classes. Differentiated services ensure that downstream nodes receive the information required to handle packets arriving at the respective entry ports and forward such packets appropriately to the next routers.

Measurement of QoS is another important issue in NGN. Some proposed solutions include invasive and non-invasive techniques.

Invasive techniques inject artificial traffic using traffic generators that load the networks in order to verify round-trip delay, packet rate and connectivity. Unfortunately, these invasive techniques inject undesirable traffic on the network. Additionally, these techniques do not provide a punctual per-session QoS measurement because the traffic injection is not synchronous with the actual traffic. Finally, QoS measurement is of the injected traffic rather than the actual traffic, which further dilutes the value of the measurements.

Non-invasive measurements have also been proposed. For example, QoS monitoring can be achieved by using probes that measure QoS parameters of traffic streams. This technique allows for the identification of sessions and participants and the measurement of error rates, packet loss, jitter, and delay for each stream of conversation. Unfortunately, the use of probes has limited scalability because the probes are expensive to install and maintain.

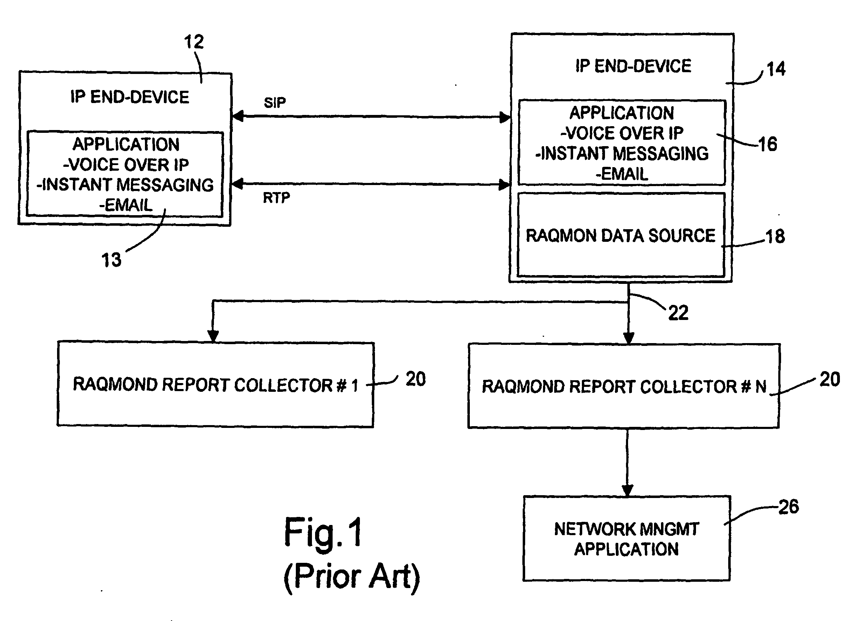

Figure 1 shows another example of a non-invasive approach described in an IETF paper called "Real-Time Application Quality of Service Monitoring (RAQMON) Framework" by Anwar Siddiqui, Dan Romascanu, and Eugene Golovinsky. A first IP device 12, such as a cellular phone, includes internal hardware necessary to run an application 13. The first device 12 communicates with a second IP device 14, also containing an application 16, using a setup protocol, such as SIP (session initiation protocol). After the setup, the two IP devices communicate through RTP (Real-time transport protocol), which is the Internet-standard protocol for the transport of real-time data, including audio and video and which can be used for media-on-demand and interactive services, such as Internet telephony. To monitor QoS, a RAQMON data source 18 is embedded in the IP device 14. This RAQMON data source (RDS) acquires QoS information produced by the application 16 during a multimedia session. QoS information is then transmitted to RAQMON report collectors 20 (1-N) through a RAQMON protocol data unit (PDU) carried by either RTCP (Real-Time Control Protocol) application or SNMP (Simple Network Management Protocol) as indicated at 22. The report collectors 20 act as a database that store QoS information, maintain historical data, and report the data to a network management application 26 for analysis.

There are several problems with the QoS solution of figure 1. First, the RDS 18 in the IP end device 14 must store a significant amount of historical data, which takes a lot of storage capacity and is expensive. Additionally, the IP end device 14 must be able to handle 3 protocols including: a signalling protocol for call setup (e.g., SIP), a protocol to send PDU (e.g., SNMP), and RTP. Each protocol requires separate software applications and separate memory areas needed to support the protocol. Additionally, the RRC 20 must be a somewhat sophisticated machine, which compromises the scalability in large networks due to cost.

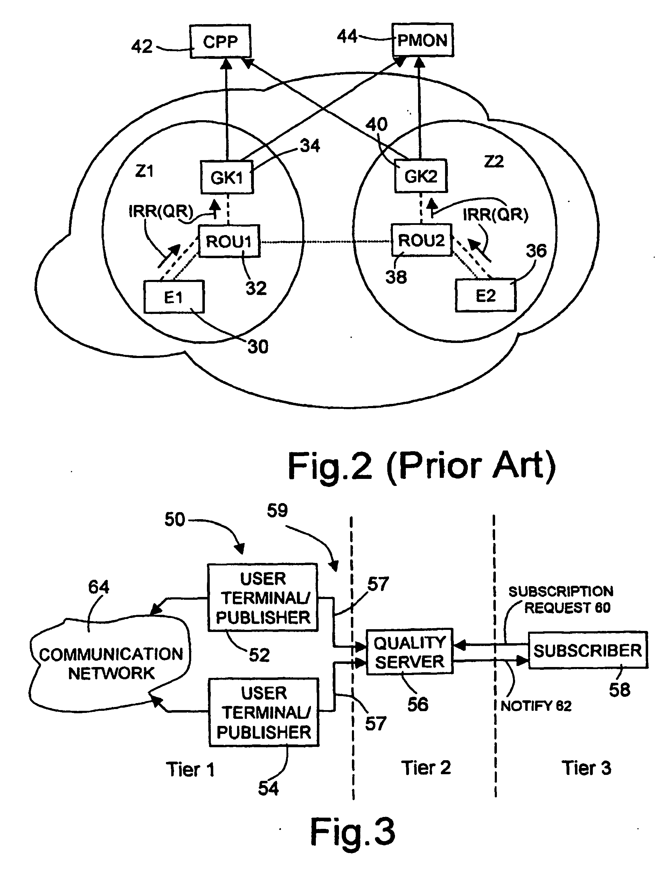

Figure 2 shows another solution described in US publication number 2003/0120773 A1 to Mueller et al. A terminal 30 communicates through a router 32 and a gatekeeper 34. A second terminal 36 also communicates through a router 38 and a second gatekeeper 40. A central post-processing device 42 (CPP) and a performance monitoring unit 44 (PMON) are assigned to communicate with the gatekeepers 34, 40 for receiving QoS information. The gatekeepers 34, 40 must perform the functions of collecting, processing, storing and delivering processed data to the monitoring applications 42, 44. Not only are the gatekeepers fairly expensive components, but also the scalability of the solution is significantly hampered because the gatekeepers can only handle a limited number of terminals.

Therefore, what is needed is a method and system to monitor QoS in networks including mobile devices without reducing communication efficiency and increasing cost and complexity.

WO 02/15481 discloses methods for managing a service provided by a network, wherein service quality and/or performance requirements are obtained from a client and quality and/or performance data are collected from the network. The collected quality and/or performance data are then compared with the service quality and/or performance requirements to determine if the network quality and/or performance requirements are satisfied. Thus, a service is comprehensively managed by using collected quality and/or performance data from the network to verify that the network is providing a level of service expected by a client.

US 2004/066753 discloses a method for monitoring RTP streams between first and second endpoints within a network using RTCP SR/RR packet information, wherein a network analyzer is connected at an intermediate point between the first and second endpoints within the network, to extract and process data from RTCP packets to select and monitor the RTP streams accumulated therein having a worst-case jitter and packet loss within the network.

### OBJECT AND SUMMARY OF THE INVENTION

The present invention therefore provides a method and system for monitoring QoS in a packet-based network, such as the Internet, that overcomes the shortcomings of the prior art.

The Applicant has found that by using a three-tier architecture wherein one or more applications (herein below called "subscribers" or "watchers") can request customized QoS reports from a quality server using a subscription request, and wherein, in response, the quality server prepares these reports based on QoS messages received from user terminals during their communications and sends the reports to the subscribers in the requested form, very flexible and low-cost QoS monitoring can be performed and high scalability of the network can be achieved.

The three-tier architecture of the present invention provides more scalability thanks to the presence of a mediation element, whereas with a two-tier architecture messages are directly exchanged by applications and terminals. Scalability is further achieved because the quality server is required to store only little history data (until the report is sent to the subscriber).

Moreover, the subscription functionality allows selectivity in that different subscribers can subscribe to different services or to a same service (possibly with different parameters) by a simple subscribe message. In particular, a subscriber can request from the quality server specific report formats and trigger points upon which the reports are sent.

Still further, the QoS information is sent over a packet-based network from the user terminals to the quality server (or "event" server) using the same protocol used to setup the user communications allowing for an efficient and low-cost QoS monitoring solution with high scalability.

According to a first aspect thereof, the present invention thus relates to a method of monitoring quality of service in a packet-based network as defined in claim 1.

Advantageously, requesting a customized report comprises indicating the type of information to be included in the QoS report.

Preferably, the method further includes providing a plurality of notification services, each notification service including provision of at least a respective quality-of-service report.

Requesting a quality-of-service report preferably includes subscribing to one of said notification services.

Preferably, the communication between the two user terminals is set-up using the first protocol, before establishing the conununication therebetween.

The customization information may include specification of one or more trigger events related to the communication and the report may be provided in response to a trigger event.

The customization information may also comprise specification of a desired report format and the report may be provided in the specified report format.

These information concerning the report may be specified when subscribing to a notification service. In particular, subscribing to a notification service may comprise specifying a desired report format and one or more trigger events for the provision of the report.

Advantageously, the packet-based network is an Internet-based network. Moreover, the second protocol may be an Internet real-time protocol (RTP).

Setting up the communication between the two user terminals preferably includes:
receiving from a first of the user terminals an invitation to communicate with a second of the user terminals;
searching for the Internet protocol address of the second user terminal;
transmitting the invitation to communicate to the Internet protocol address of the second user terminal;
receiving from the second user terminal an acceptance of the invitation to communicate; and
transmitting the acceptance to the first user terminal.

The communications between user terminals is preferably carried out through a multimedia channel including voice and data.

The report may comprise call detail record data.

In this case, providing the report comprises matching the call detail record data with the quality-of-service information based on a call identifier.

The trigger events may include overcoming a predetermined limit by a parameter related to the communication.

Alternatively or in addition, the trigger events may include termination of the communication.

The quality-of-service information is preferably received during the communication.

The method may further comprise taking a correcting action in said packet-based network in response to the report provision.

In a second aspect thereof, the present invention relate to a system for monitoring quality of service in a packet-based network as defined in claim 18.

Moreover, the user terminals are preferably suitable to setup the communications using the first protocol.

The packet-based network is preferably an Internet-based network.

The report advantageously includes the quality-of-service information received from the user terminals.

Moreover, the customization information may include one or more trigger events. In addition or in alternative, the customization information may include a desired report format.

The quality server preferably includes a report generator and a subscription register, the subscription register being suitable to register the trigger events and the report format.

The quality server is preferably suitable to receive the quality-of-service information contemporaneously while the user terminals are communicating with each other.

The communications preferably include voice and data.

Advantageously, the user terminals, the quality server and the at least a subscriber implement a three-tier architecture.

In a further aspect thereof, the present invention relates to a software program capable of implementing the method previously described.

### BRIEF DESCRIPTION OF THE DRAWINGS

For a better understanding of the present invention, a preferred embodiment, which is intended purely by way of example and is not to be construed as limiting, will now be described with reference to the attached drawings, wherein:
Figure 1 is a block diagram of a prior-art system for monitoring QoS.
Figure 2 is a diagram showing a prior-art system according to US patent application number 2003/0120773 A1.
Figure 3 is a block diagram showing a system for monitoring QoS according to the invention.
Figure 4 shows an exemplary implementation of the system of Figure 3 using a SIP network.
Figure 5 is a flowchart of a method for monitoring QoS using the system of Figure 3.
Figure 6 shows a block diagram of a quality server.

### DETAILED DESCRIPTION OF PREFERRED EMBODIMENTS OF THE INVENTION

Referring to Figure 3, a system 50 is shown having two user terminals 52, 54 that also function as publishers by collecting and publishing QoS information. The user terminals can be any type of communication device, such as IP phones, pagers, Instant Messaging clients, mobile phones, hand-held computing devices, etc. The user terminals send QoS information to a quality server 56 (also called "event server") in the form of publish messages 57 using any desired protocol (e.g., SIP, H.323, JMS, etc.) over any desired packet-based network (shown generically at 59). As further described below, the quality server 56 is configured to receive QoS information from the user terminals and to generate quality reports there from. The quality server 56 is also coupled via a network to a subscriber 58, which is suitable to request from the quality server 56 specific QoS services to be notified by a quality report. In particular, the subscriber 58 is suitable to send a subscription request 60 to the quality server including information relating to the customization of the quality report. Such customization may include information regarding a format type for receiving QoS reports and/or trigger events indicating when the reports are to be sent. Additionally, the customization can be accomplished by selecting one of a group of predetermined possibilities, or the customization can be independently generated from scratch. The subscription request 60 may take a variety of forms depending on the application and may relate to a single call, a single user, a domain (all calls from/to a domain), etc. Reference will be made in the following to two illustrative services: a first service called "corrupted QoS notification", triggered each time the quality of the communication between the users falls below a desired level, and a second service called "CDR (Call Detail Record) generation", wherein an enhanced CDR (typically used for billing purposes) including QoS data is provided at the end of a communication. Those skilled in the art will readily recognize that many other information services are possible, related to the quality of the service provided by the system.

Upon detecting a trigger event, the quality server 56 sends the report, including QoS information and in accordance with the format type identified in the subscription request 60, to the subscriber 58 in a notify message as is shown at 62. Contemporaneously while the publish messages 57 are transmitted to the quality server 56, the user terminals 52, 54 have a point-to-point communication via a communication network 64 using any desired protocol (e.g., RTP).

The solution uses three tiers: tier 1 includes the user terminals 52, 54; tier 2 includes the quality server 56; and tier 3 includes the subscriber 58. Generally, communication between the tiers is accomplished using Internet-based networks, but other types of communication techniques may be used. The three tiers make the solution readably scalable so that additional quality servers can be added. The quality server 56 will generally support many user terminals and subscribers simultaneously, but for simplicity of illustration only two user terminals 52, 54 and a single subscriber 58 are shown. Scalability is further achieved because the quality server 56 only needs to store history data until the report is sent to the subscriber, which is generally shortly after the termination of the communication between the user terminals 52, 54. Other advantages include that different subscribers can request different services by using a simple subscription message 60 and that the user terminals may send frequent publish messages rather than store extensive history data. The quality server 56 acts as a filter by decoupling the published messages 57 from subscriber 58 and by providing the subscriber with only that which it requests. Another advantage of the solution is that the same protocol may be used for setup and for message publication, as further described below.

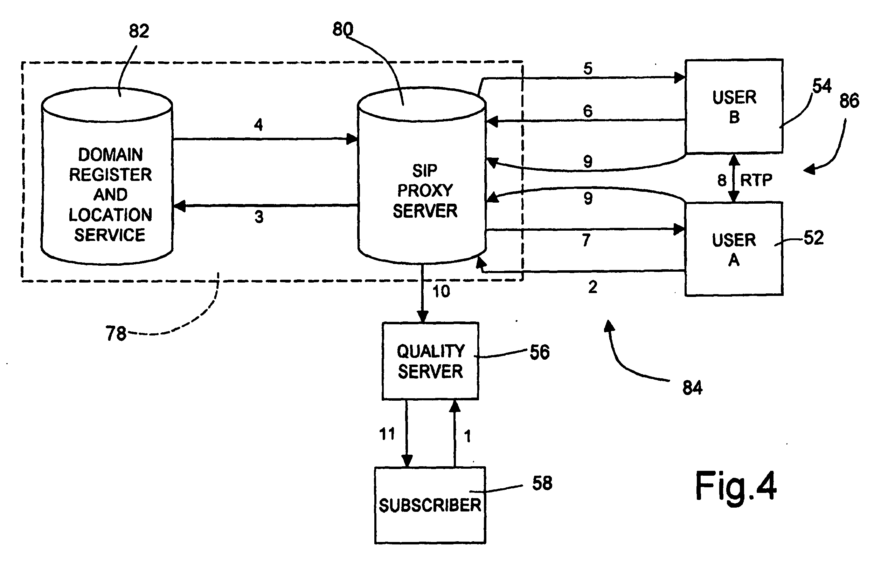

Figure 4 shows a more detailed example where a packet-based network 78 (e.g., SIP network) is used as a basis for communication setup between the user terminals 52, 54 and for communication with the quality server 56. The SIP network includes a SIP proxy server 80 and a domain register and location service 82. The numbers 1-11 are shown to represent the normal sequence of events, although events may occur in a different order. As indicated at communication 1, the subscriber 58 sends a subscribe message to the quality server 56 via the proxy server 80. The subscription message includes customization information, such as indicating the service requested, the communications to be monitored (associated to one or more domains, users or calls), the trigger events and/or the report format desired.

Assume the "corrupted QoS notification" and "CDR generation" services are requested for the communication between users A and B. Assume also user A has a SIP phone and user B has a PC running a soft client that can support voice and video. Upon powering up, both users 52, 54 register their availability and their IP addresses with the SIP proxy server 80 in the ISP's network. Arrows 2 through 7 show the setting up of a communication using a first protocol, which is generically illustrated at 84. User A initiates the call (see arrow 2) by communicating to the SIP proxy server 80 that it wants to contact user B. The SIP proxy server then asks for the IP address of user B from the domain register server 82 (see arrow 3). The domain register server 82 replies with the IP address of user B (see arrow 4). The SIP proxy server 80 then relays the request of user A to communicate with user B (see arrow 5) including the medium or media that user A 52 wants to use (this communication can be accomplished using the Session Description Protocol (SDP)). User B 54 then informs the SIP proxy server 80 that user A's invitation is accepted and that User B is ready to receive a message (see arrow 6). The SIP proxy server communicates to User A 52 that the request is accepted (see arrow 7) thereby establishing an SIP session. The users 52, 54 then establish a point-to-point real-time protocol (RTP) connection enabling them to interact (see arrow 8). Such an establishment of a communication channel using a second protocol is generically indicated at 86. At any point during the communication, Users A and B publish asynchronous QoS messages (see arrows 9) to the SIP proxy server 80, using the same protocol as used to setup the communication 84. The SIP proxy server forwards these messages to the quality server 56. Although not shown, the SIP proxy server may also need to request from the domain register 82 the IP address of the quality server 56. The quality server 56 uses the QoS information to build a report, but also monitors the QoS data for predetermined trigger events. An example trigger event is if the quality of the communication between the users falls below a desired level. In such a case, the quality server 56 sends an asynchronous message (see arrow 11) to the subscriber 58 alerting the subscriber of the faulty communication ("corrupted QoS notification"). Moreover, corrective action may be taken as a feedback, such as to reinforce the connection or to limit admission on the same link for further communications. When the communication between the users 52, 54 is terminated, an asynchronous message (arrow 9) is sent to the SIP proxy server 80 indicating termination of the communication. This message is forwarded to the quality server 56 (see arrow 10), which in response builds a QoS report in the requested format ("CDR generation"). The report preferably contains QoS data and CDR data, matched by using the Call-id associated to the communication. The report is then forwarded to the subscriber. Those skilled in the art will readily recognize that the system of Figure 4 need not be based on a SIP proxy server. For example, any signalling protocol can be used to setup the communication between Users A and B. Additionally, any asynchronous protocol may be used to communicate between the Users 52, 54 and the quality server 56. Furthermore, any asynchronous protocol may be used to communicate between the quality server 56 and the subscriber 58. Finally, any packet media transfer protocol can be used to communicate between users A and B. Although Figure 4 generally shows a single domain, the system may easily be extended to a multiple domain environment, such as by using redirect servers between the domains.

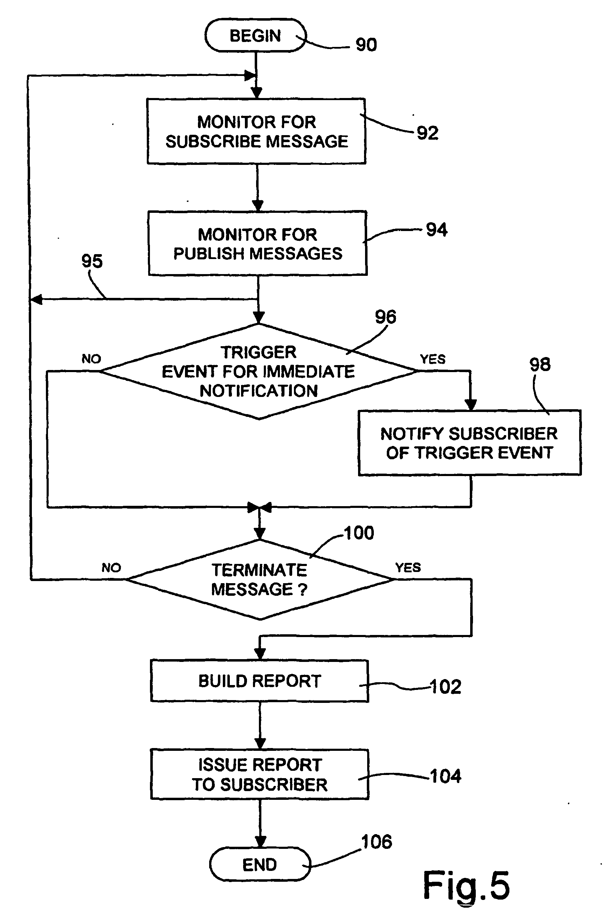

Figure 5 shows a flowchart of a method to implement the quality server 56. In process block 90 the method begins. In process block 92, the quality server 56 monitors for a subscribe message from the subscriber 58. The subscribe message may define trigger events and the report format sent from the quality server to the subscriber. The communication between the quality server and the subscriber is generally an asynchronous communication and can take any desired format, but an example subscribe message in XML format could be as follows (two domains called "topolinia" and "paperopoli" are considered):

```
        <?xml version="1.0" encoding="'UTF-8"?>
        <SUBSCRIBE
 xmlns:xsi="http://www.w3.org/2001/XMLSchema-instance"
        xsi:noNamespaceSchemaLocation="C:\Documents and
 Settings\00917438\Desktop\ro8\qos through
 sip\susbscribe2.xsd>
               <Generation_CDR>
                      <Dominio>topolinia.wd<\Dominio>
                      <Dominio>paperopoli.wd<\Dominio>
               </Generation_CDR>
        </SUBSCRIBE>
```

The subscribe message may request a call detail record (CDR) that usually includes a start time, an end time and other information used for billing purposes. The subscribe message may also request immediate notification of any corruption on the communication between the users, so that the subscriber can take corrective action. In process block 94, the quality server 56 monitors for publish messages. The users send the publish messages contemporaneously while having a point-to-point communication between each other. Although the users may use other protocols for the publish message, it may be desirable to use the same protocol as used for the communication setup because the users will not be required to use extra program and stack space needed to support a separate protocol. For example, SIP is a protocol that can be used for both publish messages and for a call setup. The publish message is preferably an asynchronous message sent with configurable parameters and does not add considerable traffic to the network. A simple example of a publish message in XML, containing RTCP information, is as follows:

```
 <?xml version="1.0" encoding="UTF-8"?>
 <notify-publish
 xmins:xsi="http://www.w3.org/2001/XMLSchema-instance"
 xsi:noNamespaceSSchemaLocation="C:\notify publish_5.xsd"
>
        <call_id>kj1238921u219</call_id>
        <date>2001-10-15T09:41:33</date>
        <call_closed>true</call_closed>
        <packet_RTCP>
               <header>
                       <IP_address_A>163.162.76.1</IP_address_A>
                       <IP_address_B>163.162.24.1</IP_address_B>
                       <PT>200</PT>
                </header>
                <reportblock>
                       <cumulative_num_of_pckt_lost>1234</cumula
                tive_num_of_pckt_lost>
        <interarrival_jitter>45</interarrival_jitter>
                </reportblock>
        </packet_RTCP>
 <notify-publish>
```

If no publish messages are received, the process repeats as shown at 95. However, if a publish message is received, then in decision block 96, the quality server 56 performs analysis on the publish message to see if there is an event that requires immediate notification to the subscriber 58. For example, if the quality of service during the communication between users falls below an acceptable level (for example, due to jitter over threshold or to an excessive number of packet lost), the quality server may send an asynchronous notify message to the subscriber as shown in process block 98. Such an asynchronous notify message may be a report format as requested in the subscribe message. Otherwise, in process block 100, the quality server analyzes the published message to determine if the communication between A and B terminated. If not, the process starts again at process block 92. If the communication has terminated, in process block 102 the quality server builds a report in conformance with that which was requested in the subscribe message. In process block 104, the report is asynchronously sent to the subscriber and the process ends at process block 106. Although not shown, the process starts again at process block 90 monitoring for messages.

An example report sent to the subscriber could be as follows:

```
 <?xml version="1.0" encoding="UTF-8"?>
 <notify-publish
 xmlns:xsi="http://www.w3.org/2001/XMLSchema-instance"
 xsi:noNamespaceSchemaLocation="C:\notify_publish_5.xsd">
       <Service_name>generation CDR<Service_name>
 <call_id>kj1238921u219<call_id>
 <date>2001-10-15T09:41:33</date>
 <call_closed>false</call_closed>
 <packet_RTCP>
       <header>
               <IP_address_A>163.162.76.16</IP_address_A>
               <IP_address_B>163.162.24.145</IP_address_B>
               <PT>200</PT>
        </header>
       <reportblock>
               <cumulative_num_of-pckt_lost>524</cumulative_n
       um_of_pckt_lost>
               <interarrival_jitter>21</interarrival_jitter>
       </reportblock>
 </packet_RTCP>
 </notify-publish>
```

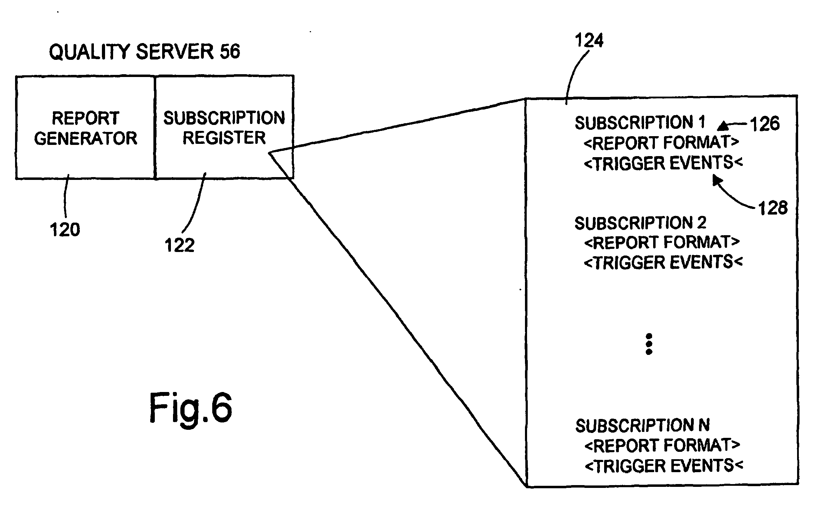

Figure 6 shows the quality server 56 in more detail. The quality server generally includes two parts: a report generator 120 and a subscription register 122. The subscription register 122 stores a list 124 of subscriptions pertaining to one or more subscribers. Each subscription includes subscription information such as a report format 126 and trigger events 128. The report generator 120 analyzes the incoming publish messages from the user terminals and uses the publish messages to generate a report in conformance with the subscription register. The report generator also monitors the publish messages for trigger events. To complete the report, the report generator associates the user with one of the subscriptions in the list 124. Then the report generator uses the subscription information from the subscription register to generate the report in a format desired by the subscriber. The report is generally sent at the termination of the communication between users. However, the subscriber can control when the report is sent by setting trigger events in the subscription register.

The word "setup" or "setting up" a communication is generically used to refer to call setup or resource reservation.

It is clear that numerous modifications and variants can be made to the present invention, all falling within the scope of the invention, as defined in the appended claims.

In particular, although the invention has been described with particular reference to a SIP event framework, those skilled in the art will readily recognize that any other effective software technology can be used that allows to implement in an effective and performing way a three-tier event framework able to:
- publish QoS data from the network terminals towards a mediation element (such as the quality server);
- subscribe to services residing in the mediation element. This subscription can be made from the QoS applications (subscribers) towards the mediation element, and regards one or more specific services that the mediation element implements.
- being notified of specific service dependent events generated by the service logic in the mediation element. The notification can be made in a selective way from the mediation element towards the QoS applications that subscribed the service.

Example of these software technologies are JMS (using Java APIs) and Web Services (using XML).

## Claims

1. A method of monitoring quality of service in a packet-based network (59, 78), the network being suitable to establish communications between user terminals (52, 54);
the method comprising:
requesting to a quality-of-service server (56) a quality-of-service report for at least a communication between two of the users terminals, wherein requesting includes providing information relating to a customization of the quality-of-service report;
sending from the two user terminals to the quality-of-service server (56) quality-of-service information related to the communication between the two user terminals (52, 54); and
providing the quality-of-service report based on the quality-of-service information and the customization information;
wherein the quality-of-service information is sent by the two user terminals (52, 54) using a first protocol and the communication between the two user terminals (52, 54) is carried out using a second protocol different from the first protocol;
and wherein the first protocol is a session initiation protocol SIP.

2. The method of claim 1, further including providing a plurality of notification services, each of the notification services including provision of at least a respective quality-of-service report.

3. The method of claim 2, wherein requesting a quality-of-service report includes subscribing to one of the notification services.

4. The method of claim 1, further comprising, before carrying out the communication between the two user terminals (52, 54), setting-up the communication using the first protocol.

5. The method of claim 1, wherein the customization information includes specifying one or more trigger events related to the communication between the two user terminals (52, 54) and wherein the quality-of-service report is provided in response to a trigger event.

6. The method of claim 1, wherein the customization information includes specifying a desired quality-of-service report format and wherein the quality-of-service report is provided in the desired quality-of-service report format.

7. The method of claim 3, wherein subscribing to a notification service comprises specifying a desired quality-of-service report format and one or more trigger events for the provision of the quality-of-service report.

8. The method of claim 1, wherein the packet-based network is an Internet-based network.

9. The method of claim 1, wherein the second protocol is an Internet real-time protocol RTP.

10. The method of claim 4, wherein setting up the communication between the two user terminals (52, 54) includes:
receiving from a first one of the user terminals (52, 54) an invitation to communicate with a second one of the user terminals (52, 54);
searching for the Internet protocol address of the second user terminal;
transmitting the invitation to communicate to the Internet protocol address of the second user terminal;
receiving from the second user terminal an acceptance of the invitation to communicate; and
transmitting the acceptance to the first user terminal.

11. The method of claim 1, wherein the communication between the two user terminals (52, 54) is carried out through a multimedia channel including voice and data.

12. The method of claim 1, wherein the quality-of-service report comprises call detail record data.

13. The method of claim 12, wherein providing the quality-of-service report comprises matching the call detail record data with the quality-of-service information based on a call identifier.

14. The method of claim 5, wherein the trigger events include overcoming a predetermined limit by a parameter related to the communication between the two user terminals (52, 54).

15. The method of claim 5, wherein the trigger events include termination of the communication between the two user terminals (52, 54).

16. The method of claim 1, wherein the quality-of-service information is sent during the communication between the two user terminals (52, 54).

17. The method of claim 1, further comprising taking a correcting action in the packet-based network in response to the quality-of-service report provision.

18. A system for monitoring quality of service in a packet-based network (59, 78), the network being configured to establish communications between user terminals (52, 54) configured to send quality-of-service information related to the communications to a quality-of-service server (56);
the system comprising:
- a subscriber (58) configured to send a request for a quality-of-service report for at least a communication between two of the user terminals (52, 54), the request including information relating to a customization of the quality-of-service report; and
- a quality-of-service server (56) configured to receive from the two user terminals (52, 54) quality-of-service information related to the communication between the two user terminals (52, 54), and to provide the quality-of-service report based on the quality-of-service information and the customization information;
wherein the two user terminals (52, 54) are suitable to send the quality-of-service information to the quality-of-service server (56) using a first protocol, and to communicate with each other using a second protocol different from the first protocol;
and wherein the first protocol is a session initiation protocol SIP.

19. The system of claim 18, wherein the two user terminals (52, 54) are suitable to set-up the communication with each other using the first protocol.

20. The system of claim 18 or 19, wherein the packet-based network (59, 78) is an Internet-based network.

21. The system of any one of claims 18 to 20, wherein the quality-of-service report includes the quality-of-service information sent by the two user terminals (52, 54).

22. The system of any one of claims 18 to 21, wherein the customization information includes one or more trigger events.

23. The system of claim 22, wherein the customization information includes a desired quality-of-service report format.

24. The system of claim 23, wherein the quality-of-service server (56) includes a report generator (120) and a subscription register (122), the subscription register being suitable to register the trigger events and the quality-of-service report format.

25. The system of any one of claims 18 to 24, wherein the quality-of-service server (56) is suitable to receive the quality-of-service information contemporaneously while the two user terminals (52, 54) are communicating with each other.

26. The system of any one of claims 18 to 25, wherein the communication between the two user terminals (52, 54) includes voice and data.

27. The system of any one of claims 18 to 26, wherein the two user terminals (52, 54), the quality-of-service server (56) and the subscriber (58) implement a three-tier architecture.

28. A software program capable of implementing the method according to any one of claims 1 to 17.

## Patentansprüche

1. Verfahren zum Überwachen der Dienstgüte in einem Paketnetzwerk (59, 78), wobei das Netzwerk dazu geeignet ist, Kommunikationen zwischen Benutzerendgeräten (52, 54) herzustellen;
wobei das Verfahren umfasst:
Anfordern eines Dienstgüteberichts von einem Dienstgüteserver (56) über mindestens eine Kommunikation zwischen zwei der Benutzerendgeräte, wobei das Anfordern ein Bereitstellen von Informationen umfasst, die eine kundenspezifische Anpassung des Dienstgüteberichts betreffen;
Senden von Dienstgüte-Informationen, welche die Kommunikation zwischen den zwei Benutzerendgeräten (52, 54) betreffen, von den zwei Benutzerendgeräten an den Dienstgüteserver (56);
Bereitstellen des Dienstgüteberichts auf Basis der Dienstgüte-Informationen und der Informationen zur kundenspezifischen Anpassung;
wobei die Dienstgüte-Informationen durch die zwei Benutzerendgeräte (52, 54) unter Verwendung eines ersten Protokolls gesendet werden und die Kommunikation zwischen den zwei Benutzerendgeräten (52, 54) unter Verwendung eines zweiten Protokolls ausgeführt wird, das sich von dem ersten Protokoll unterscheidet;
und wobei das erste Protokoll ein Session-Initiation-Protokoll SIP ist.

2. Verfahren nach Anspruch 1, das ferner das Bereitstellen von mehreren Mitteilungsdiensten umfasst, wobei jeder Mitteilungsdienst eine Bereitstellung von mindestens einem entsprechenden Dienstgütebericht umfasst.

3. Verfahren nach Anspruch 2, wobei das Abfordern eines Dienstgüteberichts ein Abonnieren eines der Mitteilungsdienste umfasst.

4. Verfahren nach Anspruch 1, das ferner das Einrichten der Kommunikation unter Verwendung des ersten Protokolls vor dem Ausführen der Kommunikation zwischen den zwei Benutzerendgeräten (52, 54) umfasst.

5. Verfahren nach Anspruch 1, wobei die Informationen zur kundenspezifischen Anpassung ein Bestimmen eines oder mehrerer auslösender Ereignisse umfassen, welche die Kommunikation zwischen den zwei Benutzerendgeräten (52, 54) betreffen, und wobei der Dienstgütebericht in Reaktion auf ein auslösendes Ereignis bereitgestellt wird.

6. Verfahren nach Anspruch 1, wobei die Informationen zur kundenspezifischen Anpassung ein Bestimmen eines gewünschten Formats des Dienstgüteberichts umfassen und wobei der Dienstgütebericht in dem gewünschten Format des Dienstgüteberichts bereitgestellt wird.

7. Verfahren nach Anspruch 3, wobei das Abonnieren eines Mitteilungsdienstes ein Bestimmen eines gewünschten Formats des Dienstgüteberichts und eines oder mehrerer auslösender Ereignisse für die Bereitstellung des Dienstgüteberichts umfasst.

8. Verfahren nach Anspruch 1, wobei das Paketnetzwerk ein Netzwerk auf Internetbasis ist.

9. Verfahren nach Anspruch 1, wobei das zweite Protokoll eine Internet-Echtzeit-Protokoll RTP ist.

10. Verfahren nach Anspruch 4, wobei das Einrichten der Kommunikation zwischen den zwei Benutzerendgeräten (52, 54) umfasst:
Empfangen einer Einladung von einem ersten der Benutzerendgeräte (52, 54) zur Kommunikation mit einem zweiten der Benutzerendgeräte (52, 54);
Suchen nach der Internetprotokolladresse des zweiten Benutzerendgeräts;
Übermitteln der Einladung zur Kommunikation an die Internetprotokolladresse des zweiten Benutzerendgeräts;
Empfangen einer Zustimmung zu der Einladung zur Kommunikation von dem zweiten Benutzerendgerät; und
Übermitteln der Zustimmung an das erste Benutzerendgerät.

11. Verfahren nach Anspruch 1, wobei die Kommunikation zwischen den zwei Benutzerendgeräten (52, 54) über einen Multimedia-Kanal einschließlich Sprache und Daten ausgeführt wird.

12. Verfahren nach Anspruch 1, wobei der Dienstgütebericht Aufzeichnungsdaten zu Rufdetails umfasst.

13. Verfahren nach Anspruch 12, wobei das Bereitstellen des Dienstgüteberichts einen Abgleich der Aufzeichnungsdaten zu Rufdetails mit den Dienstgüte-Informationen auf Basis einer Rufkennung umfasst.

14. Verfahren nach Anspruch 5, wobei die auslösenden Ereignisse ein Überwinden eines vorgegebenen Grenzwerts durch einen Parameter umfassen, der die Kommunikation zwischen den zwei Benutzerendgeräten (52, 54) betrifft.

15. Verfahren nach Anspruch 5, wobei die auslösenden Ereignisse ein Beenden der Kommunikation zwischen den zwei Benutzerendgeräten (52, 54) umfassen.

16. Verfahren nach Anspruch 1, wobei die Dienstgüte-Informationen während der Kommunikation zwischen den zwei Benutzerendgeräten (52, 54) gesendet werden.

17. Verfahren nach Anspruch 1, ferner das Ergreifen einer Korrekturmaßnahme in dem Paketnetzwerk in Reaktion auf die Bereitstellung des Dienstgüteberichts umfassend.

18. System zur Überwachung der Dienstgüte in einem Paketnetzwerk (59, 78), wobei das Netzwerk so ausgebildet ist, dass Kommunikationen zwischen Benutzerendgeräten (52, 54) hergestellt werden können, die eingerichtet sind, Dienstgüte-Informationen, welche die Kommunikationen betreffen, an einen Dienstgüteserver (56) zu senden;
wobei das System umfasst:
einen Abonnenten (58), der eingerichtet ist, eine Anforderung eines Dienstgüteberichts über mindestens eine Kommunikation zwischen zwei der Benutzerendgeräte (52, 54) zu senden, wobei das Anfordern ein Bereitstellen von Informationen umfasst, die eine kundenspezifische Anpassung des Dienstgüteberichts betreffen; und
einen Dienstgüteserver (56), der eingerichtet ist, von den zwei Benutzerendgeräten (52, 54) Dienstgüte-Informationen zu empfangen, welche die Kommunikation zwischen den zwei Benutzerendgeräten (52, 54) betreffen, und den Dienstgütebericht auf Basis der Dienstgüte-Informationen und der Informationen zur kundenspezifische Anpassung bereitzustellen;
wobei die zwei Benutzerendgeräte (52, 54) geeignet sind, die Dienstgüte-Informationen unter Verwendung eines ersten Protokolls an den Dienstgüteserver (56) zu senden und miteinander unter Verwendung eines zweiten Protokolls zu kommunizieren, das sich von dem ersten Protokoll unterscheidet;
und wobei das erste Protokoll ein Session-Initiation-Protokoll SIP ist.

19. System nach Anspruch 18, wobei die zwei Benutzerendgeräte (52, 54) geeignet sind, die Kommunikation miteinander unter Verwendung des ersten Protokolls einzurichten.

20. System nach Anspruch 18 oder 19, wobei das Paketnetzwerk (59, 78) ein Netzwerk auf Internetbasis ist.

21. System nach einem der Ansprüche 18 bis 20, wobei der Dienstgütebericht die Dienstgüte-Informationen enthält, die durch die zwei Benutzerendgeräte (52, 54) gesendet werden.

22. System nach einem der Ansprüche 18 bis 21, wobei die Informationen zur kundenspezifischen Anpassung ein oder mehrere auslösende Ereignisse umfassen.

23. System nach Anspruch 22, wobei die Informationen zur kundenspezifischen Anpassung ein gewünschtes Format des Dienstgüteberichts enthalten.

24. System nach Anspruch 23, wobei der Dienstgüteserver (56) einen Berichterzeuger (120) und ein Abonnementregister (122) aufweist, wobei das Abonnementregister geeignet ist, die auslösenden Ereignisse und das Format des Dienstgüteberichts zu registrieren.

25. System nach einem der Ansprüche 18 bis 24, wobei der Dienstgüteserver (56) geeignet ist, die Dienstgüte-Informationen zur gleichen Zeit zu empfangen, in der die Benutzerendgeräte (52, 54) miteinander kommunizieren.

26. System nach einem der Ansprüche 18 bis 25, wobei die Kommunikation zwischen den zwei Benutzerendgeräten (52, 54) Sprache und Daten einschließt.

27. System nach einem der Ansprüche 18 bis 26, wobei die zwei Benutzerendgeräte (52, 54), der Dienstgüteserver (56) und der Abonnent (58) eine Dreiebenenarchitektur implementieren.

28. Softwareprogramm, das zum Realisieren des Verfahrens nach einem der Ansprüche 1 bis 17 in der Lage ist.

## Revendications

1. Procédé de surveillance de la qualité de service dans un réseau à base de paquets (59, 78), le réseau étant approprié pour établir des communications entre des terminaux d'utilisateurs (52, 54) ;
le procédé comprenant des étapes pour :
demander à un serveur de qualité de service (56) un rapport de qualité de service pour au moins une communication entre deux des terminaux d'utilisateurs, dans lequel la demande comprend la fourniture d'informations relatives à une personnalisation du rapport de qualité de service ;
envoyer des deux terminaux d'utilisateurs vers le serveur de qualité de service (56) d'informations de qualité de service liées à la communication entre les deux terminaux d'utilisateurs (52, 54) ; et
fournir un rapport de qualité de service sur la base des informations de qualité de service et des informations de personnalisation ;
dans lequel les informations de qualité de service sont envoyées par les deux terminaux d'utilisateurs (52, 54) en utilisant un premier protocole et la communication entre les deux terminaux d'utilisateurs (52, 54) est effectuée en utilisant un second protocole différent du premier protocole ;
et dans lequel le premier protocole est un protocole d'initiation de session SIP.

2. Procédé selon la revendication 1, comprenant en outre la fourniture d'une pluralité de services de notification, chacun des services de notification comprenant la fourniture d'au moins un rapport de qualité de service respectif.

3. Procédé selon la revendication 2, dans lequel la demande d'un rapport de qualité de service comprend l'abonnement à un des services de notification.

4. Procédé selon la revendication 1, comprenant en outre, avant d'effectuer la communication entre les deux terminaux d'utilisateurs (52, 54), l'établissement de la communication en utilisant le premier protocole.

5. Procédé selon la revendication 1, dans lequel les informations de personnalisation comprennent la spécification d'un ou plusieurs événements déclencheurs liés à la communication entre les deux terminaux d'utilisateurs (52, 54) et dans lequel le rapport de qualité de service est fourni en réponse à un événement déclencheur.

6. Procédé selon la revendication 1, dans lequel les informations de personnalisation comprennent la spécification d'un format de rapport de qualité de service souhaité et dans lequel le rapport de qualité de service est fourni dans le format de rapport de qualité de service souhaité.

7. Procédé selon la revendication 3, dans lequel l'abonnement à un service de notification comprend la spécification d'un format de rapport de qualité de service souhaité et d'un ou plusieurs événements déclencheurs pour la fourniture du rapport de qualité de service.

8. Procédé selon la revendication 1, dans lequel le réseau à base de paquets est un réseau basé sur Internet.

9. Procédé selon la revendication 1, dans lequel le second protocole est un protocole Internet en temps réel RTP.

10. Procédé selon la revendication 4, dans lequel l'établissement de la communication entre les deux terminaux d'utilisateurs (52, 54) comprend :
la réception en provenance d'un premier des terminaux d'utilisateurs (52, 54), d'une invitation à communiquer avec un second des terminaux d'utilisateurs (52, 54) ;
la recherche de l'adresse de protocole Internet du second terminal d'utilisateur ;
la transmission de l'invitation à communiquer à l'adresse de protocole Internet du second terminal d'utilisateur ;
la réception en provenance du second terminal d'utilisateur d'une acceptation de l'invitation à communiquer ; et
la transmission de l'acceptation au premier terminal d'utilisateur.

11. Procédé selon la revendication 1, dans lequel la communication entre les deux terminaux d'utilisateurs (52, 54) est effectuée par l'intermédiaire d'un canal multimédia comprenant la voix et des données.

12. Procédé selon la revendication 1, dans lequel le rapport de qualité de service comprend des données d'enregistrement de détail d'appel.

13. Procédé selon la revendication 12, dans lequel la fourniture du rapport de qualité de service comprend la mise en concordance des données d'enregistrement de détail d'appel avec les informations de qualité de service sur la base d'un identificateur d'appel.

14. Procédé selon la revendication 5, dans lequel les événements déclencheurs comprennent le dépassement d'une limite prédéterminée par un paramètre lié à la communication entre les deux terminaux d'utilisateurs (52, 54).

15. Procédé selon la revendication 5, dans lequel les événements déclencheurs comprennent la terminaison de la communication entre les deux terminaux d'utilisateurs (52, 54).

16. Procédé selon la revendication 1, dans lequel les informations de qualité de service sont envoyées pendant la communication entre les deux terminaux d'utilisateurs (52, 54).

17. Procédé selon la revendication 1, comprenant en outre l'exécution d'une action de correction dans le réseau à base de paquets en réponse à la fourniture du rapport de qualité de service.

18. Système pour surveiller la qualité de service dans un réseau à base de paquets (59, 78), le réseau étant configuré pour établir des communications entre des terminaux d'utilisateurs (52, 54) configurés pour envoyer des informations de qualité de service liées aux communications à un serveur de qualité de service (56) ;
le système comprenant :
- un abonné (58) configuré pour envoyer une demande de rapport de qualité de service pour au moins une communication entre deux des terminaux d'utilisateurs (52, 54), la demande comprenant des informations relatives à une personnalisation du rapport de qualité de service ; et
- un serveur de qualité de service (56) configuré pour recevoir en provenance des deux terminaux d'utilisateurs (52, 54) des informations de qualité de service liées à la communication entre les deux terminaux d'utilisateurs (52, 54), et pour fournir le rapport de qualité de service sur la base des informations de qualité de service et des informations de personnalisation ;
dans lequel les deux terminaux d'utilisateurs (52, 54) sont appropriés pour envoyer les informations de qualité de service au serveur de qualité de service (56) en utilisant un premier protocole, et pour communiquer l'un avec l'autre en utilisant un second protocole différent du premier protocole ;
et dans lequel le premier protocole est un protocole d'initiation de session SIP.

19. Système selon la revendication 18, dans lequel les deux terminaux d'utilisateurs (52, 54) sont appropriés pour établir la communication l'un avec l'autre en utilisant le premier protocole.

20. Système selon la revendication 18 ou 19, dans lequel le réseau à base de paquets (59, 78) est un réseau basé sur Internet.

21. Système selon l'une quelconque des revendications 18 à 20, dans lequel le rapport de qualité de service comprend les informations de qualité de service envoyées par les deux terminaux d'utilisateurs (52, 54).

22. Système selon l'une quelconque des revendications 18 à 21, dans lequel les informations de personnalisation comprennent un ou plusieurs événements déclencheurs.

23. Système selon la revendication 22, dans lequel les informations de personnalisation comprennent un format de rapport de qualité de service souhaité.

24. Système selon la revendication 23, dans lequel le serveur de qualité de service (56) comprend un générateur de rapport (120) et un registre d'abonnement (122), le registre d'abonnement étant approprié pour enregistrer les événements déclencheurs et le format de rapport de qualité de service.

25. Système selon l'une quelconque des revendications 18 à 24, dans lequel le serveur de qualité de service (56) est approprié pour recevoir les informations de qualité de service en même temps que les deux terminaux d'utilisateurs (52, 54) communiquent l'un avec l'autre.

26. Système selon l'une quelconque des revendications 18 à 25, dans lequel la communication entre les deux terminaux d'utilisateurs (52, 54) comprend la voix et des données.

27. Système selon l'une quelconque des revendications 18 à 26, dans lequel les deux terminaux d'utilisateurs (52, 54), le serveur de qualité de service (56) et l'abonné (58) mettent en oeuvre une architecture à trois niveaux.

28. Programme logiciel capable de mettre en oeuvre le procédé selon l'une quelconque des revendications 1 à 17.
